# EUROPEAN PATENT SPECIFICATION

(11) **EP 3 196 998 B1**
(45) Date of publication and mention of the grant of the patent: **19.02.2020**
(21) Application number: 14899584.8
(22) Date of filing: 16.09.2014
(51) Int. Cl.: H02G 1/02

(54) **PROCESS FOR LIVE REPLACEMENT OF TENSION HARD-TUBE BUS-BAR JUMPER INSULATOR OF +/- 800KV ULTRA-HIGH-VOLTAGE DC TRANSMISSION LINE**
VERFAHREN ZUM LIVE-ERSATZ EINES HARTROHR-SAMMELSCHIENENBRÜCKENSPANNUNGSISOLATORS EINER ULTRAHOCHSPANNUNGS-GLEICHSTROMÜBERTRAGUNGSLEITUNG MIT +/- 800KV
PROCÉDÉ DE REMPLACEMENT SOUS TENSION D'ISOLATEUR DE CAVALIER DE BARRE OMNIBUS À TUBE RIGIDE D'UNE LIGNE DE TRANSMISSION DE COURANT CONTINU À ULTRA-HAUTE TENSION DE +/- 800 KV

(30) Priority: 13.08.2014 CN 201410405008; 13.08.2014 CN 201410397393; 13.08.2014 CN 201420456218 U
(43) Date of publication of application: 26.07.2017
(73) Proprietor: State Grid Corporation of China, Beijing 100000 (CN); Hubei Electric Power Transmission&Distribution Engineering Co., Wuhan, Hubei 430063 (CN)
(72) Inventor: YANG, Ying, Wuhan Hubei 430063 (CN); JI, Bin, Wuhan Hubei 430063 (CN); LIU, Zhengyun, Wuhan Hubei 430063 (CN); WANG, Ming, Wuhan Hubei 430063 (CN); ZENG, Chen, Wuhan Hubei 430063 (CN); LI, Yong, Wuhan Hubei 430063 (CN); LI, Jinge, Wuhan Hubei 430063 (CN); XIONG, Wenhuan, Wuhan Hubei 430063 (CN); ZHANG, Min, Wuhan Hubei 430063 (CN); WANG, Lei, Wuhan Hubei 430063 (CN); WANG, Wenmin, Wuhan Hubei 430063 (CN); ZHU, Haibo, Wuhan Hubei 430063 (CN); YI, Wenkai, Wuhan Hubei 430063 (CN)
(74) Representative: Grey, Ian Michael
(86) International application number: PCT/CN2014/000847
(87) International publication number: WO 2016/023141

(56) References cited:
- CN-A- 1 048 286
- CN-A- 101 022 212
- CN-A- 101 814 707
- CN-A- 103 606 853
- CN-A- 103 618 251
- CN-Y- 201 323 409
- FR-A1- 2 143 629
- JP-A- 2005 295 681
- SU-A1- 1 228 177
- US-A1- 2008 246 010
- PEI, JIANGHUAI ET AL.: 'Hot Exchange of Four-Series Tension Insulator on 500 kV Line' EAST CHINA ELECTRIC POWER vol. 32, no. 1, 31 January 2014, pages 26 - 28, XP008184132

## Description

The present invention relates to the field of ultra-high-voltage transmission line construction, in particular, to a process for live replacement of a strain hard-tube bus-bar jumper insulator of a ±800kV ultra-high-voltage DC transmission line.
With the operation of ±800kV ultra-high-voltage DC transmission lines, the study on live working on the ±800kV transmission lines becomes a main study direction of current domestic live working.

There is a blank in the process method for live-working replacement of a strain hard-tube bus-bar jumper insulator of a ±800kV ultra-high-voltage DC transmission lines in China, and a study needs to be urgently carried out.
In view of this, in order to overcome the defect of the prior art, it is necessary to provide a process for live replacement of a strain hard-tube bus-bar jumper insulator of a ±800kV ultra-high-voltage DC transmission line.

CN101 814 707 A discloses a process for the live replacement of a strain hard-tube bus-bar jumper insulator of a transmission line.

According to the present invention, a process for live replacement of a strain hard-tube bus-bar jumper insulator of a ±800kV ultra-high-voltage DC transmission line comprises the following steps:
equipotential workers enter an equipotential;
ground electricians perform assembly and connection to form two sets of hard tube bus bartransmission line lifting systems according to a rod length obtained through field investigation and measurement so that the combined length of the hard tube bus bar lifting systems is consistent with said rod length; wherein said assembly and connection of each of said hard tube bus bar lifting systems includes the assembly and connection of a hard tube bus bar lifting clamp, a lead screw, an insulating pull rod and a strain cross arm upper clamp, wherein the hard tube bus bar lifting clamp comprises a hanging plate having two ends, a main plate and a hanging hole formed in a middle position of the hanging plate for connection to the lead screw, arc surfaces for holding the hard tube bus bars arranged at positions close to the two ends on the main plate, and bolts for disassembling or assembling the hanging plate and the main plate arranged on tabs, the two ends of the hanging plate and the main plate being connectable through the tabs;
the ground electricians respectively lift up the transmission linehard tube bus bar lifting systems, wherein each of the transmission line lifting systems comprises a transmission line lifting clamp, a lead screw, an insulating pull rod and a strain cross arm upper clamp, the transmission line lifting clamp, the lead screw, the insulating pull rod and the strain cross arm upper clamp,
two equipotential electricians respectively install transmission line the hard tube bus bar lifting clamps at the lower ends of the transmission linehard tube bus bar lifting systems on hard tube bus barstransmission lines, and an on-tower electrician installs strain cross arm upper clamps at the upper ends of the hard tube bus bar transmission line lifting systems in construction holes of a strain cross arm;
the two equipotential electricians simultaneously tighten lead screws in the hard tube bus bar transmission line lifting systems to enable the transmission lineshard tube bus bar in the transmission linehard tube bus bar lifting clamps to be uniformly stressed to transfer a load on a composite insulator onto the transmission linehard tube bus bar lifting systems;
the equipotential electricians remove a U-shaped suspension bolt at the lower end of the composite insulator, the equipotential electricians tie a control rope to the lower end of the composite insulator, the ground electricians loosen the control rope to enable the composite insulator to slowly get close to a tower body from an inclined state and reach a naturally vertical state, the on-tower electrician removes a U-shaped suspension bolt at the upper end of the composite insulator, and the ground electricians control a transfer rope to place the composite insulator onto the ground at a constant speed;
the ground electricians remove the damaged composite insulator from the transfer rope, hang a new composite insulator onto the transfer rope and lift up the new composite insulator to a hanging point of the cross arm end, the on-tower electrician installs a U-shaped suspension bolt of the new composite insulator, the ground electricians tighten the control rope to enable the new composite insulator to change from a naturally vertical state to an inclined state, and the equipotential electricians install a U-shaped suspension bolt of the hard tube bus bartransmission line end; and the equipotential electricians check the stress situation of the new composite insulator and then loosen the lead screws in the hard tube bus bar transmission line lifting systems to transfer the load on the hard tube bus bartransmission line lifting systems to the new composite insulator.,
characterized in that the transmission line lifting clamp comprises a hanging plate and a main plate, the two end of the hanging plate and the main plate are respectively connected through tabs , a hanging hole which is connected with the lead screw is formed in a middle position of the hanging plate, arc surfaces for holding the transmission lines are arranged at positions close to the two ends on the main plate, and bolts for disassembling or assembling the hanging plate and the main plate are arranged on the tabs.

In at least one embodiment, the strain cross arm upper clamp comprises an installation clamping plate and a lug, the lug is arranged below the installation clamping plate, reinforcing ribs are arranged between the installation clamping plate and the lug, a lateral section of the installation clamping plate is in a shape of U which is anticlockwise rotated for ninety degrees such that the installation clamping plate is clamped at a hanging point on the strain cross arm, fixing holes through which bolts penetrate to fix the strain cross arm upper clamp on the strain cross arm are formed in the installation clamping plate, and a hanging hole for connection with the insulating pull rod is formed in the lug.

In at least one embodiment, the process further comprises the following steps: the on-tower electrician carries the transfer rope, climbs up to a tower and marks a fixing point at the hanging point of the cross arm; the ground electricians transfer a lifting basket and pulley block system to the on-tower electrician through a transfer system; the on-tower electrician performs on-tower arrangement on a lifting basket and a pulley block according to a way of entering and exiting the equipotential through the lifting basket; and the equipotential electricians sit in the lifting basket, the ground electricians control the control rope of the pulley block system to enable the lifting basket to slowly get close to the strain hard-tube bus-bars according to an arc trajectory by taking a fixing rope as a radius, and the equipotential electricians use potential transfer rods to hook the hard-tube bus-bars at a distance of 0.5m away from the hard-tube bus-bars and then enter a strong electric field.

In at least one embodiment, the process further comprises the following steps: the equipotential electricians cooperate with the on-tower electrician to remove the hard-tube bus-bar lifting systems, and the ground electricians transfer the hard-tube bus-bar lifting systems to the ground through the transfer rope; the equipotential electricians sit in the lifting basket and use the potential transfer rods to hook the hard-tube bus-bars, the ground electricians tighten the control rope of the pulley block, the equipotential electricians loosen the potential transfer rods after the potential transfer rods are stressed, and the equipotential electricians return back to the cross arm at a constant speed; and the on-tower electrician transfers the lifting basket and the transfer rope system to the ground electricians, checks whether there are remnants on the tower and then gets down from the tower.

The process for live replacement of the strain hard-tube bus-bar jumper insulator of the ±800kV ultra-high-voltage DC transmission line adopts a method of transferring the load on the hard-tube bus-bars and drainage wires so as to transfer the stress on the jumper insulator onto the load-bearing tools of the hard-tube bus-bar lifting systems, such that the purposes of removing connection points at the two ends of the jumper insulator and successfully replacing the jumper insulator are achieved.
FIG. 1 illustrates a schematic view of fixation of a transfer rope in a process for live replacement of a strain hard-tube bus-bar jumper insulator of a ±800kV ultra-high-voltage DC transmission line provided by the preferred embodiment of the present invention;
FIG. 2 illustrates a schematic view of arrangement of a lifting basket and pulley block system in a process for live replacement of a strain hard-tube bus-bar jumper insulator of a ±800kV ultra-high-voltage DC transmission line provided by the preferred embodiment of the present invention;
FIG. 3A and FIG. 3B respectively illustrate a main view and a left view of a hard-tube bus-bar lifting clamp used in a process provided by the present invention;
FIG. 4A, FIG. 4B and FIG. 4C respectively illustrate a right view, a main view and a top view of a strain cross arm upper clamp used in a process provided by the present invention;
FIG. 5 illustrates a main view of a hard-tube bus-bar lifting system used in a process of the present invention;
FIG. 6 illustrates a schematic view of removal of a composite insulator in a process for live replacement of a strain hard-tube bus-bar jumper insulator of a ±800kV ultra-high-voltage DC transmission line provided by the preferred embodiment of the present invention.

In order to better understand the present invention, the present invention will be described below in detail in combination with the drawings and the specific embodiments.

Live working on a ±800kV ultra-high-voltage DC transmission line is the same as live working on a 500kV ultra-high-voltage DC transmission line, firstly the personal safety of personnel needs to be guaranteed, thus shielding clothes, insulating pull rods and insulating ropes for a ±800kV voltage level firstly need to be tested as qualified through preventative electrical tests, and otherwise, they should not be used during actual field operation of live working. Preventative electrical tests may be divided into two types as follows:
(1) Switching impulse withstand voltage test: a test length is 6.2m, +250/2500µs standard impulse waves are adopted, voltage 1600kV is applied for a total of 15 times, and there should be no flashover, breakdown and heating.
(2) DC withstand voltage test: a test length is 6.2m, DC voltage 950kV is applied, voltage withstanding time is 5min and there should be no flashover, breakdown and heating.
Field investigation needs to be performed on a tower on site before live working, and whether the field environment and technical parameters of the tower satisfy live working conditions is judged:
(1) For field investigation of a strain tower of a ±800kV ultra-high-voltage DC transmission line, whether there are crossings in large and small side spans on site needs to be checked.
(2) Landforms surrounding a foundation of the strain tower of the ±800kV ultra-high-voltage DC transmission line can satisfy live working field requirements and there are positions for standing below a working point.
(3) An infrared distance meter is adopted for distance measurement between a lower plane of a hanging point on a cross arm of the strain tower of the ±800kV ultra-high-voltage DC transmission line and an upper plane of a hard-tube bus-bar, so as to determine a rod length of a hard-tube bus-bar lifting system and a length of a fixing rope of a lifting basket.
(4) An initial position of the lifting basket and a fixing position of a pulley block are determined according to the length of the fixing rope of the lifting basket.
(5) Technicians need to check that a combination gap of live working in a process when equipotential electricians enter an equipotential is no less than 6.6m according to the tower on which the working is performed.

Equipotential working personnel should put on special shielding clothes for ±800kV live working (including helmets, shielding masks, coveralls, gloves, conductive socks or conductive shoes, similarly hereinafter). Flame-retardant underwear should be put on inside shielding clothes, performance indexes of shielding clothes should satisfy GB6568-1 and GB6568-2, and shielding efficiency of shielding masks should not be smaller than 200dB. All parts of shielding clothes should be well and reliably connected, and resistance between furthermost endpoints of shielding clothes and trousers is measured by using a universal meter and should not be more than 20Ω.

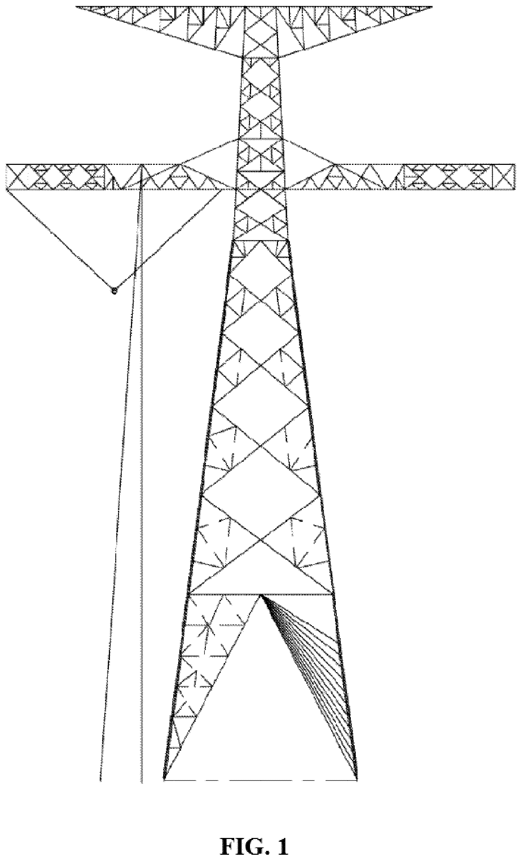

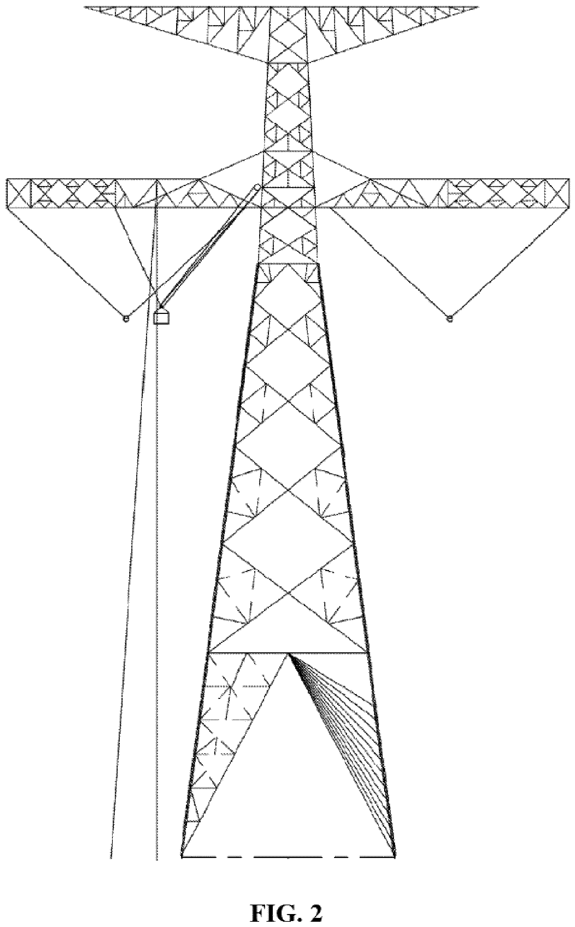

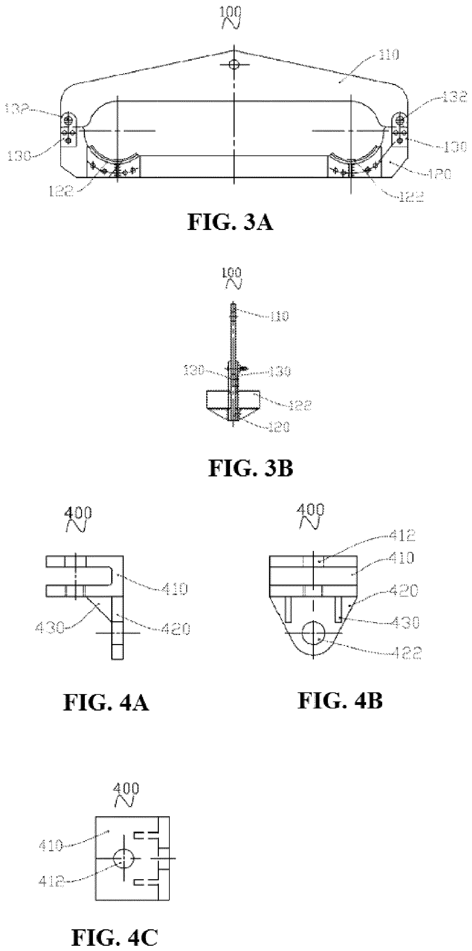

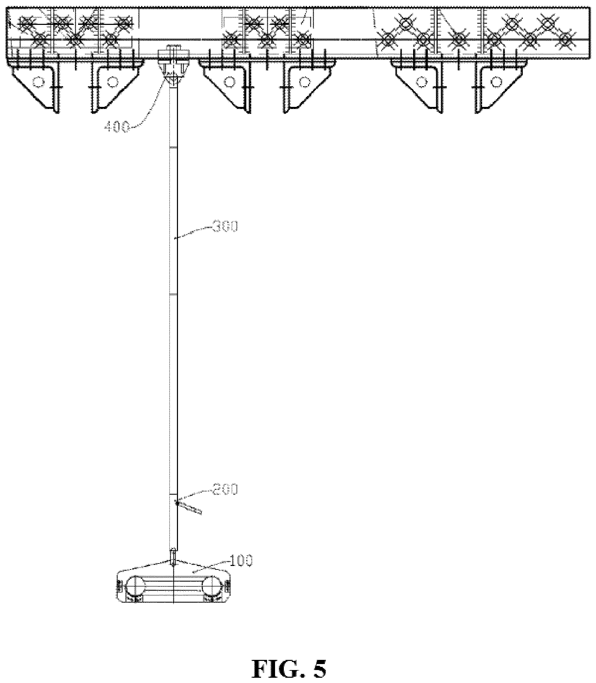

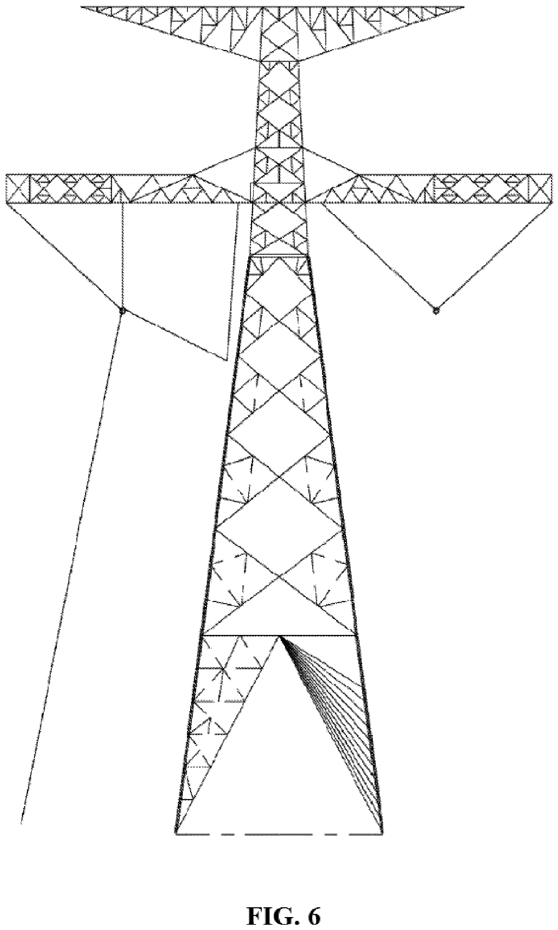

A process for live replacement of a strain hard-tube bus-bar jumper insulator of a ±800kV ultra-high-voltage DC transmission line provided by the present invention adopts a method of transferring a load on hard-tube bus-bars and drainage wires so as to transfer the stress on a jumper insulator onto load-bearing tools of hard-tube bus-bar lifting systems, such that the purposes of removing connection points at the two ends of the jumper insulator and successfully replacing the jumper insulator are achieved. The process for live-working replacement of the strain hard-tube bus-bar jumper insulator of the ±800kV ultra-high-voltage DC transmission line provided by the present invention specifically comprises the following steps:
(1) An on-tower electrician carries a transfer rope, climbs up to a tower, marks a fixing point at a hanging point of a cross arm and installs a transfer system as illustrated in FIG. 1.
(2) Ground electricians transfer a lifting basket and pulley block system to the on-tower electrician through the transfer system.
(3) The on-tower electrician performs on-tower arrangement on a lifting basket and a pulley block according to a way of entering and exiting the equipotential through the lifting basket (as illustrated in FIG. 2).
(4) After the on-tower electrician checks that the connection situation of the pulley block system is good, equipotential electricians sit in the lifting basket, the ground electricians control a control rope of the pulley block system to enable the lifting basket to slowly get close to strain hard-tube bus-bars according to an arc trajectory by taking a fixing rope as a radius, and the equipotential electricians use potential transfer rods to hook the hard-tube bus-bars at a distance of 0.5m away from the hard-tube bus-bars and then enter a strong electric field. At this moment, the equipotential electricians and the ±800kV ultra-high-voltage DC transmission line reach an equal potential.
(5) The ground electricians assemble and connect a hard-tube bus-bar lifting clamp 100 (as illustrated in FIG. 3A and FIG. 3B), a mechanical lead screw 200, an insulating pull rod 300 and a strain cross arm upper clamp 400 (as illustrated in FIG. 4A, FIG. 4B and FIG. 4C) to form a hard-tube bus-bar lifting system (as illustrated in FIG. 5) according to a rod length obtained through field investigation and measurement, and a combined length should be consistent with the length obtained through investigation and measurement. In an operation process, a total of two sets of hard-tube bus-bar lifting systems are needed.
   The hard-tube bus-bar lifting clamp 100 comprises a hanging plate 110 and a main plate 120, and two ends of the hanging plate 110 and the main plate 120 are respectively connected through tabs 130. A hanging hole 112 is formed in a middle position of the hanging plate 110 and is used for connection with the hydraulic lead screw 200. Arc surfaces 122 for holding hard-tube bus-bars are arranged at positions close to the two ends on the main plate 120. Bolts 132 are arranged on the tabs 130 and are used for disassembling or assembling the hanging plate 110 and the main plate 120.
   The strain cross arm upper clamp 400 comprises an installation clamping plate 410 and a lug 420, the lug 420 is arranged below the installation clamping plate 410, and reinforcing ribs 430 for connecting the installation clamping plate 410 and the lug 420 are directly arranged between the installation clamping plate 410 and the lug 420. A lateral section of the installation clamping plate 410 is in a shape of U which is anticlockwise rotated for ninety degrees such that the installation clamping plate 410 is clamped at the hanging point on the strain cross arm. Fixing holes are formed in the installation clamping plate 410 and are used for bolts to penetrate to fix the strain cross arm upper clamp 400 on the strain cross arm. A hanging hole 422 is formed in the lug 420 and is used for connection with the insulating pull rod 300.
(6) The ground electricians respectively lift up the hard-tube bus-bar lifting systems, and two equipotential electricians respectively install the hard-tube bus-bar lifting clamps 100 at the lower ends of the hard-tube bus-bar lifting systems on hard-tube bus-bars. The on-tower electrician installs the strain cross arm upper clamps 400 in construction holes of the strain cross arm.
(7) After the hard-tube bus-bar lifting systems are installed, the two equipotential electricians simultaneously tighten the hydraulic lead screws 200 to enable the hard-tube bus-bars in the hard-tube bus-bar lifting clamps 100 to be uniformly stressed to transfer a load on a composite insulator onto the hard-tube bus-bar lifting systems.
(8) Please refer to FIG. 6. the equipotential electricians remove a U-shaped suspension bolt at the lower end of the composite insulator, the equipotential electricians tie a control rope to the lower end of the composite insulator, the ground electricians loosen the control rope to enable the composite insulator to slowly get close to a tower body from an inclined state and finally reach a naturally vertical state, the equipotential on-tower electrician removes a U-shaped suspension bolt at the upper end of the composite insulator, and the ground electricians control the transfer rope to place the composite insulator onto the ground at a constant speed.
(9) The ground electricians remove the damaged composite insulator from the transfer rope, hang a new composite insulator onto the transfer rope and lift up the new composite insulator to the hanging point of the cross arm end, and the on-tower electrician installs a U-shaped suspension bolt. The ground electricians tighten the control rope to enable the insulator to change from a naturally vertical state to an inclined state at a constant speed, and the equipotential electricians install a U-shaped suspension bolt of the hard-tube bus-bar end.
(10) The equipotential electricians check the stress situation of the new composite insulator and then loosen the hydraulic lead screws 200 to transfer the load on the hard-tube bus-bar lifting systems to the new composite insulator.
(11) The equipotential electricians cooperate with the on-tower electrician to remove the hard-tube bus-bar lifting systems, and the ground electricians transfer the hard-tube bus-bar lifting systems to the ground through the transfer rope.
(12) The equipotential electricians sit in the lifting basket and use the potential transfer rods to hook the hard-tube bus-bars, the ground electricians tighten the control rope of the pulley block so that the lifting basket is stressed, the equipotential electricians loosen the potential transfer rods after the potential transfer rods are stressed, and the equipotential electricians return back to the cross arm (ground potential) at a constant speed.
(13) The on-tower electrician transfers the lifting basket and the transfer rope system to the ground electricians, checks whether there are remnants on the tower and then gets down from the tower.

The process for live replacement of the strain hard-tube bus-bar jumper insulator of the ±800kV ultra-high-voltage DC transmission line provided by the present invention adopts a method of transferring a load on hard-tube bus-bars and drainage wires so as to transfer the stress on the jumper insulator onto load-bearing tools of hard-tube bus-bar lifting systems, such that the purposes of removing connection points at the two ends of the jumper insulator and successfully replacing the jumper insulator are achieved.

The process for live-working replacement of the strain hard-tube bus-bar jumper insulator of the ±800kV ultra-high-voltage DC transmission line provided by the present invention has the following innovations:
Firstly, the process for live-working replacement of the strain hard-tube bus-bar jumper insulator of the ±800kV ultra-high-voltage DC transmission line is put forward for the first time in China.
Secondly, the tools of the hard-tube bus-bar lifting systems are designed and used for the first time in China.

Finally, the live-working replacement of the strain hard-tube bus-bar jumper composite insulator of the ±800kV ultra-high-voltage DC transmission line is performed for the first time in China.

The above-mentioned embodiments only express several implementation modes of the present invention, are described more specifically and in more detail, but should not be thereby understood as limitations to the scope of the patent of the present invention. It should be pointed out that one skilled in the art may make various variations and improvements without departing from the present invention as defined by the attached claims and such variations and modifications should be all included in the protection scope of the present invention. Therefore, the protection scope of the patent of the present invention should be subject to the attached claims.

## Claims

1. A process for live replacement of a strain hard tube bus bar jumper insulator of a ±800kV ultra-high-voltage DC transmission line, comprising the following steps:
equipotential workers enter an equipotential;
ground electricians perform assembly and connection to form two sets of hard tube bus bar lifting systems according to a rod length obtained through field investigation and measurement so that the combined length of the hard tube bus bar lifting systems is consistent with said rod length; wherein said assembly and connection of each of said hard tube bus bar lifting systems includes the assembly and connection of a hard tube bus bar lifting clamp (100), a lead screw (200), an insulating pull rod (300) and a strain cross arm upper clamp (400), wherein the hard tube bus bar lifting clamp (100) comprises a hanging plate (110) having two ends, a main plate (120) and a hanging hole (112) formed in a middle position of the hanging plate (110) for connection to the lead screw (200), arc surfaces (122) for holding the hard tube bus bars arranged at positions close to the two ends on the main plate (120), and bolts for disassembling or assembling the hanging plate and the main plate arranged on tabs (130), the two ends of the hanging plate (110) and the main plate (120) being connectable through the tabs (130); the ground electricians respectively lift up the hard tube bus bar lifting systems,
two equipotential electricians respectively install the hard tube bus bar lifting clamps (100) at the lower ends of the hard tube bus bar lifting systems on hard tube bus bars, and an on-tower electrician installs strain cross arm upper clamps (400) at the upper ends of the hard tube bus bar lifting systems in construction holes of a strain cross arm;
the two equipotential electricians simultaneously tighten lead screws in the hard tube bus bar lifting systems to enable the hard tube bus bar in the hard tube bus bar lifting clamps (100) to be uniformly stressed to transfer a load on a composite insulator onto the hard tube bus bar lifting systems;
the equipotential electricians remove a U-shaped suspension bolt at the lower end of the composite insulator, the equipotential electricians tie a control rope to the lower end of the composite insulator, the ground electricians loosen the control rope to enable the composite insulator to slowly get close to a tower body from an inclined state and reach a naturally vertical state, the on-tower electrician removes a U-shaped suspension bolt at the upper end of the composite insulator, and the ground electricians control a transfer rope to place the composite insulator onto the ground at a constant speed;
the ground electricians remove the damaged composite insulator from the transfer rope, hang a new composite insulator onto the transfer rope and lift up the new composite insulator to a hanging point of the cross arm end, the on-tower electrician installs a U-shaped suspension bolt of the new composite insulator, the ground electricians tighten the control rope to enable the new composite insulator to change from a naturally vertical state to an inclined state, and the equipotential electricians install a U-shaped suspension bolt of the hard tube bus bar end; and
the equipotential electricians check the stress situation of the new composite insulator and then loosen the lead screws in the hard tube bus bar lifting systems to transfer the load on the hard tube bus bar lifting systems to the new composite insulator.

2. The process for live replacement of the strain hard tube bus bar jumper insulator of the ±800kV ultra-high-voltage DC transmission line according to claim 1, **characterized in that** the strain cross arm upper clamp (400) comprises an installation clamping plate (410) and a lug (420), the lug (420) is arranged below the installation clamping plate (410), reinforcing ribs (430) are arranged between the installation clamping plate (410) and the lug (420), a lateral section of the installation clamping plate (410) is in a shape of U which is anticlockwise rotated for ninety degrees such that the installation clamping plate (410) is clamped at a hanging point on the strain cross arm, fixing holes through which bolts penetrate to fix the strain cross arm upper clamp (400) on the strain cross arm are formed in the installation clamping plate (410), and a hanging hole (422) for connection with the insulating pull rod (300) is formed in the lug (420).

3. The process for live replacement of the strain hard tube bus bar jumper insulator of the ±800kV ultra-high-voltage DC transmission line according to any one of claims 1-2, **characterized in that** the process further comprises the following steps:
the on-tower electrician carries the transfer rope, climbs up to a tower and marks a fixing point at the hanging point of the cross arm;
the ground electricians transfer a lifting basket and pulley block system to the on-tower electrician through a transfer system;
the on-tower electrician performs on-tower arrangement on a lifting basket and a pulley block according to a way of entering and exiting the equipotential through the lifting basket; and
the equipotential electricians sit in the lifting basket, the ground electricians control the control rope of the pulley block system to enable the lifting basket to slowly get close to the strain hard tube bus bars according to an arc trajectory by taking a fixing rope as a radius, and the equipotential electricians use potential transfer rods to hook the hard tube bus bars at a distance of 0.5m away from the hard tube bus bars and then enter a strong electric field.

4. The process for live replacement of the strain hard tube bus bar jumper insulator of the ±800kV ultra-high-voltage DC transmission line according to any one of claims 1-2, **characterized in that** the process further comprises the following steps:
the equipotential electricians cooperate with the on-tower electrician to remove the hard tube bus bar lifting systems, and the ground electricians transfer the hard tube bus bar lifting systems to the ground through the transfer rope;
the equipotential electricians sit in the lifting basket and use the potential transfer rods to hook the hard tube bus bars, the ground electricians tighten the control rope of the pulley block, the equipotential electricians loosen the potential transfer rods after the potential transfer rods are stressed, and the equipotential electricians return back to the cross arm at a constant speed; and
the on-tower electrician transfers the lifting basket and the transfer rope system to the ground electricians, checks whether there are remnants on the tower and then gets down from the tower.

## Patentansprüche

1. Verfahren zum Auswechseln unter Spannung eines Hartrohr-Dehnungssammelschienen-Brückenisolators einer ±800-kV-Ultrahochspannungs-Gleichstromübertragungsleitung, das folgende Schritte umfasst:
äquipotentielle Arbeiter treten in ein Äquipotential ein;
Elektriker am Boden führen die Montage und Verbindung zum Bilden von zwei Sätzen von Hartrohr-Sammelschienen-Hebesystemen gemäß einer durch Felduntersuchungen und Messungen erhaltenen Stangenlänge aus, sodass die kombinierte Länge der Hartrohr-Sammelschienen-Hebesysteme der Stangelänge entspricht; wobei die Montage und Verbindung jedes der Hartrohr-Sammelschienen-Hebesysteme die Montage und Verbindung einer Hartrohr-Sammelschienen-Hebeklemme (100), einer Leitspindel (200), einer isolierenden Zugstange (300) und einer oberen Dehnungsauslegerklemme (400) umfasst, wobei die Hartrohr-Sammelschienen-Hebeklemme (100) eine Hängeplatte (110) mit zwei Enden, eine Hauptplatte (120) und ein in einer mittleren Position der Hängeplatte (110) gebildetes Hängeloch (112) zur Verbindung mit der Leitspindel (200), umfasst, wobei Lichtbogenflächen (122) zum Halten der Hartrohr-Sammelschienen an Positionen nah bei den zwei Enden an der Hauptplatte (120) angeordnet sind und Bolzen zum Demontieren oder Montieren der Hängeplatte und der Hauptplatte an Laschen (130) angeordnet sind, wobei die zwei Enden der Hängeplatte (110) und die Hauptplatte (120) mittels der Laschen (130) verbunden werden können; die Elektriker am Boden heben jeweils die Hartrohr-Sammelschienen-Hebesysteme an,
zwei äquipotentielle Elektriker installieren jeweils die Hartrohr-Sammelschienen-Hebeklemmen (100) an den unteren Enden der Hartrohr-Sammelschienen-Hebesysteme an Hartrohr-Sammelschienen und ein Elektriker auf dem Mast installiert obere Dehnungsauslegerklemmen (400) an den oberen Enden der Hartrohr-Sammelschienen-Hebesysteme in Konstruktionslöchern eines Dehnungsauslegers;
die zwei äquipotentiellen Elektriker ziehen gleichzeitig Leitspindeln in den Hartrohr-Sammelschienen-Hebesystemen an, um zu ermöglichen, dass die Hartrohr-Sammelschiene in den Hartrohr-Sammelschienen-Hebeklemmen (100) gleichmäßig beansprucht wird, um eine Last auf einem Verbundisolator auf die Hartrohr-Sammelschienen-Hebesysteme zu übertragen;
die äquipotentiellen Elektriker entfernen einen U-förmigen Aufhängebolzen an dem unteren Ende des Verbundisolators, die äquipotentiellen Elektriker binden ein Kontrollseil an das untere Ende des Verbundisolators, die Elektriker am Boden lockern das Kontrollseil, um es dem Verbundisolator zu ermöglichen, sich langsam aus einem schräggestellten Zustand einem Mastkörper zu nähern und einen natürlichen vertikalen Zustand zu erreichen, der Elektriker auf dem Mast entfernt einen U-förmigen Aufhängebolzen an dem oberen Ende des Verbundisolators und die Elektriker am Boden kontrollieren ein Förderseil, um den Verbundisolator mit einer konstanten Geschwindigkeit auf dem Boden abzulegen;
die Elektriker am Boden entfernen den beschädigten Verbundisolator von dem Förderseil, hängen einen neuen Verbundisolator an das Förderseil und heben den neuen Verbundisolator zu einer Aufhängestelle des Auslegerendes an, der Elektriker auf dem Mast installiert einen U-förmigen Aufhängebolzen des neuen Verbundisolators, die Elektriker am Boden spannen das Kontrollseil, um es dem neuen Verbundisolator zu ermöglichen, aus einem natürlichen vertikalen Zustand in einen schräggestellten Zustand zu wechseln, und die äquipotentiellen Elektriker installieren einen U-förmigen Aufhängebolzen des Hartrohr-Sammelschienenendes; und
die äquipotentiellen Elektriker prüfen die Beanspruchungssituation des neuen Verbundisolators und lockern dann die Leitspindeln in den Hartrohr-Sammelschienen-Hebesystemen, um die Last auf den Hartrohr-Sammelschienen-Hebesystemen auf den neuen Verbundisolator zu übertragen.

2. Verfahren zum Auswechseln unter Spannung des Hartrohr-Dehnungssammelschienen-Brückenisolators der ±800-kV-Ultrahochspannungs-Gleichstromübertragungsleitung nach Anspruch 1, **dadurch gekennzeichnet, dass** die obere Dehnungsauslegerklemme (400) eine Installationsklemmplatte (410) und einen Ansatz (420) umfasst, der Ansatz (420) unter der Installationsklemmplatte (410) angeordnet ist, Verstärkungsrippen (430) zwischen der Installationsklemmplatte (410) und dem Ansatz (420) angeordnet sind, ein seitlicher Abschnitt der Installationsklemmplatte (410) in Form eines U ist, das im Gegenuhrzeigersinn um neunzig Grad gedreht ist, sodass die Installationsklemmplatte (410) an einer Aufhängestelle an dem Dehnungsausleger geklemmt wird, Befestigungslöcher, durch die Bolzen hindurchragen, um die obere Dehnungsauslegerklemme (400) an dem Dehnungsausleger zu befestigen, in der Installationsklemmplatte (410) gebildet sind, und ein Hängeloch (422) zur Verbindung mit der isolierenden Zugstange (300) in dem Ansatz (420) gebildet ist.

3. Verfahren zum Auswechseln unter Spannung des Hartrohr-Dehnungssammelschienen-Brückenisolators der ±800-kV-Ultrahochspannungs-Gleichstromübertragungsleitung nach einem der Ansprüche 1-2, **dadurch gekennzeichnet, dass** das Verfahren weiter folgende Schritte umfasst:
der Elektriker auf dem Mast trägt das Förderseil, klettert auf einen Mast und markiert eine Befestigungsstelle an der Hängestelle des Auslegers;
die Elektriker am Boden fördern über ein Fördersystem einen Hebekorb und ein Flaschenzugsystem zu dem Elektriker auf dem Mast;
der Elektriker auf dem Mast führt auf dem Mast die Anordnung eines Hebekorbs und eines Flanschenzugs gemäß einer Möglichkeit zum Eintreten in das und Verlassen des Äquipotentials über den Hebekorb aus; und
die äquipotentiellen Elektriker sitzen in dem Hebekorb, die Elektriker am Boden kontrollieren das Kontrollseil des Flanschenzugsystems, um es dem Hebekorb zu ermöglichen, sich gemäß einer Lichtbogenstrecke langsam den Hartrohr-Dehnungssammelschienen zu nähern, indem ein Befestigungsseil als Radius genutzt wird, und die äquipotentiellen Elektriker verwenden Potentialübertragungsstangen, um die Hartrohr-Sammelschienen aus einer Entfernung von 0,5 m von den Hartrohr-Sammelschienen mit einem Haken zu greifen, und treten dann in ein starkes elektrisches Feld ein.

4. Verfahren zum Auswechseln unter Spannung des Hartrohr-Dehnungssammelschienen-Brückenisolators der ±800-kV-Ultrahochspannungs-Gleichstromübertragungsleitung nach einem der Ansprüche 1-2, **dadurch gekennzeichnet, dass** das Verfahren weiter folgende Schritte umfasst:
die äquipotentiellen Elektriker arbeiten mit dem Elektriker auf dem Mast zusammen, um die Hartrohr-Sammelschienen-Hebesysteme zu entfernen, und die Elektriker am Boden fördern die Hartrohr-Sammelschienen-Hebesysteme mittels des Förderseils zum Boden;
die äquipotentiellen Elektriker sitzen in dem Hebekorb und verwenden die Potentialübertragungsstangen, um die Hartrohr-Sammelschienen mit einem Haken zu greifen, die Elektriker am Boden spannen das Kontrollseil des Flanschenzugs, die äquipotentiellen Elektriker lockern die Potentialübertragungsstangen, nachdem die Potentialübertragungsstangen beansprucht wurden, und die äquipotentiellen Elektriker kehren mit konstanter Geschwindigkeit zu dem Ausleger zurück; und
der Elektriker auf dem Mast fördert den Hebekorb und das Förderseilsystem zu den Elektrikern am Boden, kontrolliert, ob irgendetwas an dem Mast zurückgeblieben ist und kommt dann von dem Mast herunter.

## Revendications

1. Procédé de remplacement sous tension d'un isolateur-tendeur de cavalier de barre omnibus à tube rigide d'une ligne de transmission de courant continu à ultra-haute tension de ± 800 kV, comprenant les étapes suivantes :
des travailleurs à l'équipotentielle entrent dans une équipotentielle ;
des électriciens au sol effectuent un assemblage et raccordement pour former deux ensembles de systèmes de levage de barre omnibus à tube rigide conformément à une longueur de tige obtenue par une enquête et une mesure sur le terrain de façon que la longueur combinée des systèmes de levage de barre omnibus à tube rigide soit compatible avec ladite longueur de tige ; dans lequel ledit assemblage et raccordement de chacun desdits systèmes de levage de barre omnibus à tube rigide comporte l'assemblage et raccordement d'une pince de levage de barre omnibus à tube rigide (100), d'une vis sans fin (200), d'une tige de traction isolante (300) et d'une pince supérieure à traverse de tension (400), dans lequel la pince de levage de barre omnibus à tube rigide (100) comprend une plaque de suspension (110) ayant deux extrémités, une plaque principale (120) et un trou de suspension (112) formé dans une position centrale de la plaque de suspension (110) pour le raccordement à la vis sans fin (200), des surfaces arquées (122) pour maintenir les barres omnibus à tube rigide disposées dans des positions proches des deux extrémités sur la plaque principale (120), et des boulons pour désassembler ou assembler la plaque de suspension et la plaque principale disposés sur des pattes (130), les deux extrémités de la plaque de suspension (110) et de la plaque principale (120) pouvant être raccordées par le biais des pattes (130) ; les électriciens au sol lèvent respectivement les systèmes de levage de barre omnibus à tube rigide,
deux électriciens à l'équipotentielle installent respectivement les pinces de levage de barre omnibus à tube rigide (100) aux extrémités inférieures des systèmes de levage de barre omnibus à tube rigide sur des barres omnibus à tube rigide, et un électricien sur pylône installe les pinces supérieures à traverse de tension (400) aux extrémités supérieures des systèmes de levage de barre omnibus à tube rigide dans des trous de construction d'une traverse de tension ;
les deux électriciens à l'équipotentielle serrent simultanément des vis sans fin dans les systèmes de levage de barre omnibus à tube rigide pour permettre à la barre omnibus à tube rigide dans les pinces de levage de barre omnibus à tube rigide (100) d'être uniformément contrainte pour transférer une charge sur un isolateur composite aux systèmes de levage de barre omnibus à tube rigide ;
les électriciens à l'équipotentielle enlèvent un boulon de suspension en U à l'extrémité inférieure de l'isolateur composite, les électriciens à l'équipotentielle attachent une corde de commande à l'extrémité inférieure de l'isolateur composite, les électriciens au sol relâchent la corde de commande pour permettre à l'isolateur composite de s'approcher lentement d'un corps de pylône à partir d'un état incliné et d'atteindre un état naturellement vertical, l'électricien sur pylône enlève un boulon de suspension en U à l'extrémité supérieure de l'isolateur composite, et les électriciens au sol commandent une corde de transfert pour placer l'isolateur composite sur le sol à une vitesse constante ;
les électriciens au sol enlèvent l'isolateur composite endommagé de la corde de transfert, suspendent un isolateur composite neuf à la corde de transfert et lèvent l'isolateur composite neuf jusqu'à un point de suspension de l'extrémité de la traverse, l'électricien sur pylône installe un boulon de suspension en U de l'isolateur composite neuf, les électriciens au sol tendent la corde de commande pour permettre à l'isolateur composite neuf de passer d'un état naturellement vertical à un état incliné, et les électriciens à l'équipotentielle installent un boulon de suspension en U de l'extrémité de la barre omnibus à tube rigide ; et les électriciens à l'équipotentielle contrôlent la situation de contrainte de l'isolateur composite neuf puis ils desserrent les vis sans fin dans les systèmes de levage de barre omnibus à tube rigide pour transférer la charge sur les systèmes de levage de barre omnibus à tube rigide à l'isolateur composite neuf.

2. Procédé de remplacement sous tension de l'isolateur-tendeur de cavalier de barre omnibus à tube rigide de la ligne de transmission de courant continu ultra-haute tension de ± 800 kV selon la revendication 1, **caractérisé en ce que** la pince supérieure à traverse de tension (400) comprend une plaque de serrage d'installation (410) et une oreille (420), l'oreille (420) est disposée sous la plaque de serrage d'installation (410), des nervures de renfort (430) sont disposées entre la plaque de serrage d'installation (410) et l'oreille (420), une section latérale de la plaque de serrage d'installation (410) a une forme en U qui tourne à quatre-vingt-dix degrés dans le sens antihoraire de façon à serrer la plaque de serrage d'installation (410) à un point de suspension sur la traverse de tension, des trous de fixation dans lesquels des boulons pénètrent pour fixer la pince supérieure à traverse de tension (400) sur la traverse de tension sont formés dans la plaque de serrage d'installation (410), et un trou de suspension (422) pour le raccordement avec la tige de traction isolante (300) est formé dans l'oreille (420).

3. Procédé de remplacement sous tension de l'isolateur-tendeur de cavalier de barre omnibus à tube rigide de la ligne de transmission de courant continu à ultra-haute tension de ± 800 kV selon l'une quelconque des revendications 1-2, **caractérisé en ce que** le procédé comprend en outre les étapes suivantes :
l'électricien sur pylône porte la corde de transfert, monte sur un pylône et marque un point de fixation au point de suspension de la traverse ;
les électriciens au sol transfèrent un panier de levage et système de palan à l'électricien sur pylône par le biais d'un système de transfert ;
l'électricien sur pylône effectue un agencement sur pylône sur un panier de levage et un palan conformément à une manière d'entrer et sortir de l'équipotentielle par le biais du panier de levage ; et
les électriciens à l'équipotentielle s'assoient dans le panier de levage, les électriciens au sol commandent la corde de commande du système de palan pour permettre au panier de levage de s'approcher lentement des barres omnibus à tube rigide suivant une trajectoire en arc en prenant une corde de fixation comme rayon, et les électriciens à l'équipotentielle utilisent des tiges de transfert de potentiel pour accrocher les barres omnibus à tube rigide à une distance de 0,5 m des barres omnibus à tube rigide et ensuite entrer dans un champ électrique fort.

4. Procédé de remplacement sous tension de l'isolateur-tendeur de cavalier de barre omnibus à tube rigide de la ligne de transmission de courant continu à ultra-haute tension de ± 800 kV selon l'une quelconque des revendications 1-2, **caractérisé en ce que** le procédé comprend en outre les étapes suivantes :
les électriciens à l'équipotentielle coopèrent avec l'électricien sur pylône pour enlever les systèmes de levage de barre omnibus à tube rigide, et les électriciens au sol transfèrent les systèmes de levage de barre omnibus à tube rigide au sol par le biais de la corde de transfert ;
les électriciens à l'équipotentielle s'assoient dans le panier de levage et utilisent les tiges de transfert de potentiel pour accrocher les barres omnibus à tube rigide, les électriciens au sol tendent la corde de commande du palan, les électriciens à l'équipotentielle relâchent les tiges de transfert de potentiel après que les tiges de transfert de potentiel ont été contraintes, et les électriciens à l'équipotentielle reviennent à la traverse à une vitesse constante ; et
l'électricien sur pylône transfère le panier de levage et le système de corde de transfert aux électriciens au sol, contrôle s'il y a des éléments restant sur le pylône puis descend du pylône.
